# EUROPÄISCHE PATENTSCHRIFT

(11) **EP 2 572 909 B1**
(45) Veröffentlichungstag und Bekanntmachung des Hinweises auf die Patenterteilung: **13.06.2018**
(21) Anmeldenummer: 12185126.5
(22) Anmeldetag: 20.09.2012
(51) Int. Cl.: B60G 17/052, B60G 17/015

(54) **VENTILEINRICHTUNG FÜR EINE LUFTFEDERUNGSEINRICHTUNG FÜR EIN FAHRZEUG**
VALVE DEVICE FOR A PNEUMATIC SUSPENSION UNIT OF A VEHICLE
SYSTEME DE SOUPAPES DESTINE A UN SYSTEME DE SUSPENSION PNEUMATIQUE D'UN VEHICULE

(30) Priorität: 22.09.2011 DE 102011114179
(43) Veröffentlichungstag der Anmeldung: 27.03.2013
(73) Patentinhaber: KNORR-BREMSE Systeme für Nutzfahrzeuge GmbH, 80809 München (DE)
(72) Erfinder: Toth, Janos, 6000 Kecskemét (HU); Kantor, Kornel, 6000 Kecskemét (HU); Geiger, Winfried, 75417 Mühlacker (DE); Fecht, Günther, 71691 Freiberg (DE); Stocker, Jürgen, 70469 Stuttgart (DE)
(74) Vertreter: Schönmann, Kurt

(56) Entgegenhaltungen:
- WO-A1-2010/043594
- WO-A1-2011/076304
- DE-A1- 10 354 056
- GB-A- 2 280 877

## Beschreibung

Die Erfindung geht aus von einer Ventileinrichtung für eine Luftfederungseinrichtung eines luftgefederten Fahrzeugs gemäß dem Oberbegriff von Anspruch 1.

Bei Ventileinrichtungen für Luftfederungseinrichtungen von luftgefederten Fahrzeugen, insbesondere von Anhängerfahrzeugen ist zusätzlich zu einer beispielsweise elektronisch gesteuerten Ventileinrichtung zum pneumatischen Vorsteuern der Hauptluft-Ventileinrichtung, um das Ist-Niveau einer Anhängerfahrzeugplattform oder eines Anhängerfahrzeugrahmens in bekannter Weise auf einen konstanten Soll-Niveau einzuregeln, eine manuell betätigbare Vorsteuereinrichtung zum willkürlichen Heben und Senken der Anhängerfahrzeugplattform oder des Anhängerfahrzeugrahmens vorgesehen, mittels der von einer Bedienperson manuell und unter Umgehung der elektronisch gesteuerten und bei einem Abkuppeln des Anhängerfahrzeugs mangels Stromversorgung ohnehin wirkungslosen Ventileinrichtung eine gewünschte Niveaulage der Anhängerfahrzeugplattform bzw. des Fahrzeugsaufbaus eingestellt werden kann. Eine solche gewünschte Niveaulage kann dann beispielsweise eine für ein Beladen des Anhängerfahrzeugs an einer Laderampe gewünschte Niveaulage sein. Dazu wird die manuell betätigbare Vorsteuereinrichtung manuell in die Stellungen "Heben" oder "Senken" bzw. "Stop" gestellt und weist hierzu Handbetätigungsmittel auf, beispielsweise in Form von durch Handtaster gesteuerten Ventilen. Weiterhin muss eine Stellung "Fahrt" vorhanden sein, in welcher die elektronisch gesteuerte Ventileinrichtung zur elektronischen Regelung des Niveaus des Fahrzeugaufbaus wieder wirksam wird.

Eine Ventileinrichtung für eine Luftfederungseinrichtung eines luftgefederten Fahrzeugs ist in der DE 103 54 056 A1 beschrieben. Dort werden gemäß der Ausführungsform von Fig.3 ein den Hauptluftstrom von einem Druckluftvorrat zu Luftfederbälgen einer rechten Fahrzeugseite und einer linken Fahrzeugseite steuerndes kombiniertes Be- und Entlüftungsventil sowie ein diesem in Bezug zum Druckluftvorrat des Hauptluftstrom vorgeordnetes Halteventil durch Steuersignale eines elektronischen Steuergeräts gesteuerte elektromagnetische Vorsteuerventile sowie von manuell betätigten Ventilen vorgesteuert. Die Ventileinrichtung wird zur Steuerung einer einkreisigen Luftfederungseinrichtung eingesetzt, wobei "einkreisig" in diesem Zusammenhang bedeutet, dass die Luftfederbälge verschiedener Achsen oder Fahrzeugseiten einem Kreis zugeordnet sind und deshalb nur gemeinsam be- und entlüftet werden können. Bei diesem Stand der Technik stehen die Luftfederbälge beider Fahrzeugseiten stets in Strömungsverbindung miteinander. Nachteilig bei einer solchen Ausführung ist, dass bei einer Kurvenfahrt Druckluft aus den Luftfederbälgen der höher belasteten kurvenäußeren Fahrzeugseite in die Luftfederbälge der geringer belastete kurveninneren Fahrzeugseite gedrängt wird, wodurch sich unerwünschte Wankbewegungen des Fahrzeugaufbaus ergeben. Falls bei einer solchen einkreisigen Luftfederungseinrichtung die Luftfederbälge unterschiedlicher Achsen stets miteinander in Strömungsverbindung können beim Bremsen aufgrund der dann vorliegenden dynamischen Achslastverlagerung Druckluft aus den höher belasteten Luftfederbälgen der Vorderachse in die Luftfederbälge der Hinterachse gedrängt und dadurch unerwünschte Nickbewegungen des Fahrzeugaufbaus erzeugt werden.

Eine gattungsgemäße Ventileinrichtung für eine Luftfederungseinrichtung eines luftgefederten Fahrzeugs ist aus WO 2011/076304 A1 bekannt. Dort ist die Vorsteuerung eines Heben/Senken-Ventils durch zwei manuell zu betätigende Vorsteuerventile und ein Magnetventil einerseits und die Vorsteuerung von zwei Halteventilen durch zwei weitere manuell zu betätigende Vorsteuerventile andererseits relativ aufwändig. Weiterhin ist auch die Mechanik zur manuellen Betätigung der vier Vorsteuerventile dann sehr komplex.

In der WO 2010/043594 A1 wird eine Ventileinrichtung für eine Luftfederungseinrichtung eines luftgefederten Anhängers beschrieben, bei welcher eine pneumatische Vorsteuerung eines einzigen pneumatisch gesteuerten Halteventils für die Vorder- und Hinterachse sowie eines ansonsten elektrisch steuerbaren Einlass- und Auslassventils über zwei manuell betätigte Ventile sowie ein Wechselventil erfolgt. Bei diesem Stand der Technik stehen die Luftfederbälge der Vorder- und Hinterachse stets in Strömungsverbindung miteinander, wodurch die eingangs beschriebenen Probleme mit unerwünschten Nickbewegungen auftreten können. Weiterhin kann nicht verhindert werden, dass die über die beiden manuell betätigbaren Ventile realisierte pneumatische Vorsteuerung des kombinierten Einlass- und Auslassventil gegen dessen elektrische Vorsteuerung arbeitet, was zu Fehlbedienungen führen kann.

Der Erfindung liegt demgegenüber die Aufgabe zugrunde, eine Ventileinrichtung der eingangs erwähnten Art derart weiter zu bilden, dass sie möglichst einfach aufgebaut ist und dabei Fehlbedienungen weitgehend ausschließt. Erfindungsgemäß wird diese Aufgabe durch die Merkmale von Patentanspruch 1 gelöst.

### Offenbarung der Erfindung

Die Hauptluft-Ventileinrichtung beinhaltet zwei in Belüftungsrichtung der Luftfederbälge gesehen der kombinierten Einlass-/Auslassventileinrichtung nachgeordnete Halteventile mit einer Sperrstellung und einer Durchlassstellung, wobei das eine Halteventil den Luftfederbälgen einer rechten Fahrzeugseite oder einer Achse und das andere Halteventil den Luftfederbälgen einer linken Fahrzeugseite oder einer anderen Achse zugeordnet ist. Dabei sind das eine Halteventil ausgangsseitig mit den Luftfederbälgen der rechten Fahrzeugseite oder der einen Achse und das andere Halteventil ausgangsseitig mit den Luftfederbälgen der linken Fahrzeugseite oder der anderen Achse verbunden.

Unter "zugeordnet" soll in dem hier vorliegenden Zusammenhang verstanden werden, dass die Druckluft in den Luftfederbälgen der jeweiligen Fahrzeugseite bzw. der jeweiligen Achse durch das dieser Fahrzeugseite zugeordnete Halteventil gesteuert wird und nicht durch das den Luftfederbälgen der anderen Fahrzeugseite bzw. der anderen Achse zugeordnete Halteventil. Hierzu weist die Ventileinrichtung voneinander getrennte Anschlüsse für die Luftfederbälge der linken Fahrzeugseite bzw. der einen Achse und für die Luftfederbälge der rechten Fahrzeugseite bzw. der anderen Achse auf, wobei der eine Anschluss mit dem einen Halteventil und der andere Anschluss mit dem anderen Halteventil in Verbindung steht. Dabei werden die beiden Halteventile von demselben Steuerluftstrom der synchron gesteuert, d.h. gemeinsam in Durchlass- bzw. Sperrstellung geschaltet. Daher ist die erfindungsgemäße Ventileinrichtung bevorzugt zur Steuerung einer einkreisigen Luftfederungseinrichtung vorgesehen. Durch die beiden, jeweils Luftfederbälgen verschiedener Fahrzeugseiten bzw. verschiedener Achse zugeordneten Halteventile ist eine Entkopplung der Luftfederbälge der Fahrzeugseiten bzw. der Achsen gegeben, so dass keine Überströmeffekte von den Luftfederbälgen der einen Fahrzeugseite bzw. der einen Achse auf die Luftfederbälge der anderen Fahrzeugseite bzw. der anderen Achse stattfinden können. Im Falle durch die Erfindung entkoppelter Luftfederbälge verschiedener Fahrzeugseiten werden dann unerwünschte Wankbewegungen bei Kurvenfahrt und bei durch die Erfindung entkoppelter Luftfederbälge verschiedener Achsen werden unerwünschte Nickbewegungen bei dynamischer Achslastverlagerung beim Bremsen vermieden.

Darüber hinaus beinhaltet die Vorsteuerventileinrichtung weiterhin eine dem manuell betätigbaren Belüftungsventil und dem manuell betätigbaren Entlüftungsventil einerseits und der Hauptluftventileinrichtung andererseits zwischengeordnete, elektronisch gesteuerte Ventileinrichtung, zum Vorsteuern der Hauptluft-Ventileinrichtung derart, dass durch Be- oder Entlüften der Luftfederbälge eine Abweichung eines Ist-Niveaus des Fahrzeugaufbaus von einem Soll-Niveau auf eine maximal zulässige Abweichung regelbar ist.

Damit wird eine parallele Vorsteuerung der den Hauptluftstrom steuernden Hauptluft-Ventileinrichtung einerseits durch das manuell steuerbare Belüftungsventil und das manuell steuerbare Entlüftungsventil und andererseits durch die elektronisch gesteuerte Ventileinrichtung verwirklicht, wobei die manuelle Vorsteuerung mittels des Belüftungsventils und des Entlüftungsventils bevorzugt im stromlosen Zustand des Fahrzeugs, insbesondere eines Anhängerfahrzeugs erfolgt, zum willkürlichen Heben und Senken des Fahrzeugaufbaus. Die Vorsteuerung durch die elektronisch gesteuerte Ventileinrichtung erfolgt demgegenüber bevorzugt in Fahrt, um das Niveau des Fahrzeugaufbaus lastunabhängig auf einem vorgegebenen Soll-Niveau zu halten.

Um nun eine möglichst einfache Steuerung der beiden Halteventile bzw. der kombinierten Einlass-/Auslassventilventileinrichtung zu ermöglichen, ist gemäß der Erfindung vorgesehen, dass das manuell betätigbare Belüftungsventil der Vorsteuerventileinrichtung mit dem einen Eingang eines Wechselventil verbunden ist, und dass das manuell betätigbare Entlüftungsventil der Vorsteuerventileinrichtung mit dem anderen Eingang des Wechselventils und der Ausgang des Wechselventils mit der Steuerseite der Halteventile verbunden ist. Mit Hilfe des Wechselventils wird dann der jeweils durch manuelle Betätigung des Belüftungsventils bzw. des Entlüftungsventils erzeugte Steuerluftdruck dann auf die Steuerseite der Halteventile bzw. der kombinierten Einlass-/Auslassventilventileinrichtung automatisch geschaltet. Der zusätzliche Aufwand in Form des Wechselventils ist dabei gering, so dass die Erfindung kostengünstig sehr zu verwirklichen ist.

Weiterhin ist gemäß der Erfindung vorgesehen, dass die elektronisch gesteuerte Ventileinrichtung ein dem Ausgang des Wechselventils einerseits und der Steuerseite der Halteventile andererseits zwischengeordnetes, in eine Entlüftungsstellung federbelastetes und in eine Belüftungsstellung elektronisch steuerbares 3/2-Wege-Magnetventil sowie ein dem manuell betätigbaren Belüftungsventil einerseits und der kombinierten Einlass-/Auslassventilventileinrichtung zwischengeordnetes, in eine Entlüftungsstellung federbelastetes und in eine Belüftungsstellung elektronisch steuerbares 3/2-Wege-Magnetventil beinhaltet.

Durch die in den Unteransprüchen aufgeführten Maßnahmen sind vorteilhafte Weiterbildungen und Verbesserungen der in den unabhängigen Ansprüchen angegebenen Erfindung möglich.

Besonders bevorzugt können die Luftfederbälge der rechten Fahrzeugseite über wenigstens eine Drossel mit den Luftfederbälgen der linken Fahrzeugseite verbunden sein. Auf diese Weise ist zwar ein gewisser Luftausgleich zwischen den Luftfederbälgen der rechten Seite möglich, jedoch erfolgt dieser Luftausgleich aufgrund der Drosselwirkung mit verengtem Strömungsquerschnitt zeitverzögert, so dass ein gewisses Wankverhalten des Fahrzeugaufbaus abhängig vom Drosselquerschnitt eingestellt werden kann.

Besonders bevorzugt wird die kombinierte Einlass-/Auslassventilventileinrichtung durch ein in die Entlüftungsstellung federbelastetes und in die Belüftungsstellung pneumatisch steuerbares 3/2 Wegeventil gebildet. Weiterhin sind die Halteventile beispielsweise als in die Sperrstellung federbelastete und in die Durchlassstellung pneumatisch steuerbares 2/2-Wegeventile ausgebildet. Nicht zuletzt können das manuell betätigbare Belüftungsventil und das manuell betätigbare Entlüftungsventil der Vorsteuereinrichtung jeweils als in eine Entlüftungsstellung federbelastete und in eine Belüftungsstellung durch Handbetätigung steuerbare 3/2-Wegeventile ausgebildet sein.

Der von der elektronisch gesteuerten Ventileinrichtung ausgesteuerte Steuerluftstrom für die Hauptluft-Ventileinrichtung stammt bevorzugt aus dem den Hauptluftstrom liefernden Druckluftvorrat, während der von dem manuell betätigten Belüftungsventil und der von dem manuell betätigten Entlüftungsventil ausgesteuerte Steuerluftstrom für die Hauptluft-Ventileinrichtung aus einem von dem den Hauptluftstrom liefernden Druckluftvorrat verschiedenen weiteren Druckluftvorrat stammt.

Das manuell betätigbare Belüftungsventil und das manuell betätigbare Entlüftungsventil sind bevorzugt in einem separaten Handbetätigungsmodul aufgenommen, welches von dem weiteren Druckluftvorrat versorgt wird. Dieses Handbetätigungsmodul kann dann eine Option zum willkürlichen Heben und Senken des Fahrzeugaufbaus bilden und beispielsweise auf einfache Weise nachgerüstet werden. Weiterhin kann das Handbetätigungsmodul bei einem Defekt leicht ausgetauscht werden. Nicht zuletzt kann das Handbetätigungsmodul an einer geeigneten, gut zugängigen Stelle am Fahrzeug verbaut werden, ohne dass die von ihm gesteuerte Hauptluft-Ventileinrichtung in unmittelbarer Nachbarschaft angeordnet werden müsste. Wegen der örtlichen Unabhängigkeit vom Handbetätigungsmodul kann die Hauptluft-Ventileinrichtung insbesondere an Stellen am Fahrzeug verbaut werden, an welchen genügend freier Bauraum vorhanden ist bzw. hinsichtlich Strömungsbedingungen, Verrohrungs- und Verkabelungsaufwand günstige Bedingungen vorhanden sind.

Die Erfindung betrifft auch eine Luftfederungseinrichtung eines luftgefederten Fahrzeugs, welche wenigstens eine oben beschriebene Ventileinrichtung beinhaltet.

### Zeichnung

Ein Ausführungsbeispiel der Erfindung ist in der Zeichnung dargestellt und in der nachfolgenden Beschreibung näher erläutert. In der Zeichnung zeigt die einzige Figur ein schematisches Schaltbild einer Ventileinrichtung einer einkreisigen Luftfederungseinrichtung gemäß einer bevorzugten Ausführungsform der Erfindung im Betriebszustand "Stop";

### Beschreibung des Ausführungsbeispiels

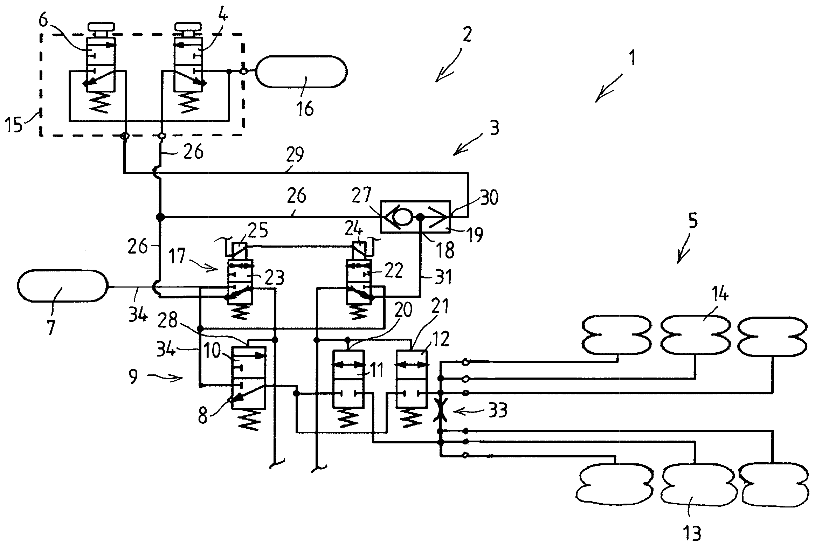

In Fig.1 ist als bevorzugtes Ausführungsbeispiel der Erfindung eine einkreisige Luftfederungseinrichtung 1 eines luftgefederten Anhängerfahrzeugs einer Zugfahrzeug-Anhängerkombination dargestellt. Die Luftfederungseinrichtung 1 beinhaltet eine Ventileinrichtung 2 mit einer Vorsteuerventileinrichtung 3, beinhaltend ein manuell betätigbares Belüftungsventil 4 zum Belüften von Luftfederbälgen 5 der Luftfederungseinrichtung 1 und damit zum willkürlichen Heben der Anhängerfahrzeugplattform sowie ein manuell betätigbares Entlüftungsventil 6 zum Entlüften der Luftfederbälge 5 und damit zum willkürlichen Senken der Anhängerfahrzeugplattform.

Weiterhin ist eine von der Vorsteuerventileinrichtung 3 pneumatisch steuerbare, einen Hauptluftstrom von einem Druckluftvorrat 7 zu den Luftfederbälgen 5 bzw. von den Luftfederbälgen 5 zu einer Entlüftung 8 steuernde Hauptluft-Ventileinrichtung 9 vorgesehen, welche eine kombinierte Einlass-/Auslassventilventileinrichtung 10 mit einer Belüftungsstellung und einer Entlüftungsstellung beinhaltet.

Die Hauptluft-Ventileinrichtung 9 beinhaltet weiterhin zwei in Belüftungsrichtung der Luftfederbälge 5 gesehen der kombinierten Einlass-/Auslassventileinrichtung 9 nachgeordnete Halteventile 11, 12 mit einer Sperrstellung und einer Durchlassstellung. Das eine Halteventil 11 ist dabei den Luftfederbälgen 13 einer linken Fahrzeugseite und das andere Halteventil 12 den Luftfederbälgen 14 einer rechten Fahrzeugseite zugeordnet. Genauer sind das eine Halteventil 11 ausgangsseitig mit den Luftfederbälgen 13 der linken Fahrzeugseite und das andere Halteventil 12 ausgangsseitig mit den Luftfederbälgen 14 der rechten Fahrzeugseite verbunden.

Besonders bevorzugt wird die kombinierte Einlass-/Auslassventilventileinrichtung durch ein in die Entlüftungsstellung federbelastetes und in die Belüftungsstellung pneumatisch steuerbares 3/2 Wegeventil 10 gebildet. Weiterhin sind die Halteventile beispielsweise als in die Sperrstellung federbelastete und in die Durchlassstellung pneumatisch steuerbare 2/2-Wegeventile 11, 12 ausgebildet. Das manuell betätigbare Belüftungsventil 4 und das manuell betätigbare Entlüftungsventil 6 der Vorsteuerventileinrichtung 3 sind jeweils als in eine Entlüftungsstellung federbelastete und in eine Belüftungsstellung durch Handbetätigung beispielsweise eines Tasters steuerbare 3/2-Wegeventile ausgebildet. Dabei sind das Belüftungsventil 4 und das Entlüftungsventil 6 in einem separaten Handbetätigungsmodul 15 mit eigenem Gehäuse aufgenommen, welches von einem eigenen Druckluftvorrat 16 mit Druckluft versorgt wird, welche dann eine Steuerdruckluft für die Hauptluft-Ventileinrichtung 9 darstellt. Dadurch bilden das Belüftungsventil 4 und das Entlüftungsventil 6 zusammen mit den dazwischen ausgebildeten Druckluftverbindungen das separate Handbetätigungsmodul 15 mit eigenem Druckluftvorrat 16 aus.

Die Vorsteuerventileinrichtung 3 beinhaltet weiterhin eine dem manuell betätigbaren Belüftungsventil 4 und dem manuell betätigbaren Entlüftungsventil 6 bzw. dem Handbetätigungsmodul 15 einerseits und der der Hauptluft-Ventileinrichtung 9 andererseits zwischengeordnete, elektronisch gesteuerte Ventileinrichtung 17, zum Vorsteuern der Hauptluft-Ventileinrichtung 9. Mittels der elektronisch gesteuerten Ventileinrichtung 17 wird durch Be- oder Entlüften der Luftfederbälge 5 eine Abweichung eines Ist-Niveaus der Anhängerfahrzeugplattform von einem Soll-Niveau auf eine maximal zulässige Abweichung geregelt, wodurch eine bekannte Niveauregulierung verwirklicht ist. Diese Niveauregulierung beinhaltet in bekannter Weise wenigstens einen hier nicht gezeigten Niveausensor sowie ein hier nicht gezeigtes elektronisches Steuergerät zur Verarbeitung der Sensorsignale und zum Erzeugen von elektrischen Steuerbefehlen für die elektronisch gesteuerte Ventileinrichtung 17.

Bei der Vorsteuerventileinrichtung 3 sind daher das manuell betätigbare Belüftungsventil 4 und das manuell betätigbare Entlüftungsventil 6 bzw. das Handbetätigungsmodul 15 einerseits und die elektronisch gesteuerte Ventileinrichtung 17 andererseits in Reihe geschaltet.

Die elektronisch gesteuerte Ventileinrichtung 17 beinhaltet bevorzugt ein einem Ausgang 18 eines Wechselventils 19 einerseits und Steueranschlüssen 20, 21 der Halteventile 11, 12 andererseits zwischengeordnetes, in eine Entlüftungsstellung federbelastetes und in eine Belüftungsstellung elektrisch steuerbares elektromagnetisches Vorsteuerventil 22 sowie ein dem manuell betätigbaren Belüftungsventil 4 einerseits und der kombinierten Einlass-/Auslassventilventileinrichtung 10 zwischengeordnetes, in eine Entlüftungsstellung federbelastetes und in eine Belüftungsstellung elektrisch steuerbares elektromagnetisches Vorsteuerventil 23, jeweils als 3/2-Wege-Magnetventil. Die beiden 3/2-Wege-Magnetventile 22, 23 weisen elektrische Steueranschlüsse 24, 25 auf, für Steuersignale des hier nicht gezeigten elektronischen Steuergeräts.

Falls das Ist-Niveau der Anhängerfahrzeugplattform von einem vorgegebenen Soll-Niveau abweicht, werden die beiden elektromagnetischen Vorsteuerventile 22, 23 in einer unten beschriebenen Weise vom Steuergerät angesteuert, um Vorsteuerdrücke für die Hauptluft-Ventileinrichtung 9 zu erzeugen. Dabei steuert das eine elektromagnetische Vorsteuerventil 23 das kombinierte Einlass-/Auslassventil 10 und das andere elektromagnetische Vorsteuerventil 22 die beiden Halteventile 11, 12 vor.

Im Detail ist das Belüftungsventil 4 über eine Druckluftverbindung 26 einerseits mit dem einen Eingang 27 des Wechselventils 19 und andererseits mit dem elektromagnetischen Vorsteuerventil 23 verbunden, welches einen pneumatischen Steueranschluss 28 des kombinierten Einlass-/Auslassventils 10 steuert. Andererseits ist das manuell betätigbare Entlüftungsventil 6 über eine Druckluftverbindung 29 mit dem anderen Eingang 30 des Wechselventils 19 verbunden. Der Ausgang 18 des Wechselventils 19 steht über eine Druckluftverbindung 31 mit dem elektromagnetischen Vorsteuerventil 22 in Verbindung, welches die Steueranschlüsse 20, 21 der beiden Halteventile 11, 12 synchron steuert. Das Wechselventil 19 steuert in bekannter Weise den größeren an seinen Eingängen 27, 30 anstehenden Druck an seinen Ausgang 18 weiter und kann in eine seine beiden Schaltstellungen federbelastet sein.

Bei der Hauptluft-Ventileinrichtung 9 ist das kombinierte Einlass-/Auslassventil 10 einerseits mit dem den Luftfederbälgen 14 der rechten Fahrzeugseite zugeordneten Halteventil 12 und andererseits mit dem den Luftfederbälgen 13 der linken Fahrzeugseite zugeordneten Halteventil 11 verbunden, wobei die beiden Haltventile 11, 12 parallel geschaltet bzw. in paralleler Weise an das kombinierte Einlass-/Auslassventil 10 angeschlossen sind. Das kombinierte Einlass-/Auslassventil 10 steht weiterhin mit dem Druckluftvorrat 7, welcher über eine Druckluftverbindung 34 auch das elektromagnetische Vorsteuerventil 23 druckluftversorgt und welcher den Hauptluftstrom liefert, in Verbindung.

Besonders bevorzugt sind die Luftfederbälge 14 der rechten Fahrzeugseite über wenigstens eine Drossel 33 mit den Luftfederbälgen 13 der linken Fahrzeugseite verbunden.

Vor diesem Hintergrund ist die Funktionsweise der Luftfederungseinrichtung 1 wie folgt:
In der Figur ist der Betriebszustand "Fahrt" gezeigt, bei welchem sich das Ist-Niveau der Anhängerfahrzeugplattform bereits auf dem Soll-Niveau befindet. Aus diesem Grund sind die Steueranschlüsse 20, 21 der beiden Halteventile 11, 12 entlüftet und die Halteventile 11, 12 durch ihre Federbelastung in Sperrstellung geschaltet, in welcher sie die Luftfederbälge 5 von jeglicher Luftzu- oder Abfuhr trennen. Das kombinierte Einlass-/Auslassventil 10 ist ebenfalls durch seine Federbelastung in Entlüftungsstellung gedrängt, weil sein Steueranschluss 28 entlüftet ist. Darum, weil die Druckluftverbindung 26 durch das vom Steuergerät nicht angesteuerte und daher in Entlüftungsstellung befindliche elektromagnetische Vorsteuerventil 23 sowie das ebenfalls in Entlüftungsstellung befindliche Belüftungsventil 4 ebenfalls entlüftet ist. Andererseits befindet sich auch das Entlüftungsventil 6 mangels manueller Betätigung seines Tasters in federbelasteter Entlüftungsstellung, so dass auch die Druckluftverbindung 29 durch das dann mangels Ansteuerung durchgeschaltete elektromagnetische Ventil 22 zu den Steueranschlüssen 20, 21 der beiden Halteventile 11, 12 entlüftet ist, welche dann federbelastet in Sperrstellung geschaltet sind.

Ausgehend vom Betriebszustand "Fahrt" wird nun die Zugfahrzeug-Anhängerkombination in den Stillstand eingebremst und das Anhängerfahrzeug vom Zugfahrzeug abgekoppelt. Dabei soll das Niveau der Anhängerfahrzeugplattform auf ein höheres Niveau angehoben werden, um Bündigkeit mit einer Verladeplattform herzustellen. Dazu wird der Taster des Belüftungsventils 4 betätigt, um den Betriebszustand "Heben" herzustellen, wodurch das Belüftungsventil 4 in Belüftungsstellung geschaltet wird, in dem Druckluft aus dem dem Handbetätigungsmodul 15 zugeordneten Druckluftvorrat 16 über die Druckluftverbindung 26 einerseits an den einen Eingang 27 des Wechselventils 19 und andererseits durch das dann stromlose und daher durchgeschaltete elektromagnetische Vorsteuerventil 23 hindurch zum Steueranschluss 28 des kombinierten Einlass-/Auslassventils 10 geleitet wird. Durch die Belüftung seines Steueranschlusses 28 wird das kombinierte Einlass-/Auslassventil 10 in seine Belüftungsstellung geschaltet, wodurch es Druckluft aus dem Druckluftvorrat 7 zu den beiden parallel geschalteten Halteventilen 11, 12 leitet.

Diese Halteventile 11, 12 werden andererseits an ihren Steueranschlüssen 20, 21 belüftet und dadurch jeweils in ihre Durchlassstellung geschaltet, weil Druckluft vom Belüftungsventil 4 über die Druckluftverbindung 26 und den einen Eingang 27 an den Ausgang 18 des Wechselventils 19 geschaltet wird, weil dessen anderer, an das unbetätigte Entlüftungsventil 6 angeschlossener Eingang 30 entlüftet ist. Aufgrund der Belüftung ihrer Steueranschlüsse 20, 21 werden die Halteventile 11, 12 synchron in ihre Durchlassstellung geschaltet, so dass Druckluft aus dem Druckluftvorrat 7 über das in Belüftungsstellung geschaltete kombinierte Einlass-/Auslassventil 10 und über die in Durchlassstellung geschalteten Halteventile 11,12 in die Luftfederbälge 5 strömt, um die Anhängerfahrzeugplattform anzuheben. Damit werden zum Heben der Anhängerfahrzeugplattform die Steueranschlüsse 28, 20, 21 sowohl des kombinierten Einlass-/Auslassventils 10 als auch der beiden Halteventile 11,12 belüftet.

Nachdem die Anhängerfahrzeugplattform das Niveau der Verladeplattform erreicht ist, wird der Taster des Belüftungsventils 4 losgelassen, wodurch dieses federbelastet wieder in seine Entlüftungsstellung einnimmt. Daraufhin wird die Druckluftverbindung 26 entlüftet und die Ventile 4, 6, 10, 11, 12, 22, 23, nehmen die in der Figur gezeigte Stellung ein, welche nun dem Betriebszustand "Stopp" entspricht.

Zum Absenken der Anhängerplattform ausgehend vom Betriebszustand "Stopp" wird zum Herstellen des Betriebszustands "Senken" der Taster des Entlüftungsventils 6 betätigt, woraufhin die Druckluftverbindung 29 und damit der andere Eingang 30 des Wechselventils 19 belüftet wird. Die an dem anderen Eingang 30 anstehende Druckluft wird an den Ausgang 18 des Wechselventils 19 weiter geschaltet, weil der eine Eingang 27 mangels Betätigung des Belüftungsventils 4 entlüftet ist. Das stromlose elektromagnetische Vorsteuerventil 22 ist federbelastet in Durchlassstellung zu den Steueranschlüssen 20, 21 der Halteventile 11, 12 geschaltet, wodurch diese belüftet und in ihre Durchlassstellung geschaltet werden.

Andererseits ist der Steueranschluss 28 des kombinierten Einlass-/Auslassventils 10 entlüftet, weil das elektromagnetische Vorsteuerventil 23 federbelastet das Belüftungsventil 4 auf diesen Steueranschluss 28 durchschaltet und das Belüftungsventil 4 mangels Betätigung federbelastet in Entlüftungsstellung geschaltet ist. Somit befindet sich das kombinierte Einlass-/Auslassventil 10 in seiner Entlüftungsstellung, so dass Druckluft durch die beiden in Durchlassstellung geschalteten Halteventile 11, 12 hindurch zum kombinierten Einlass-/Auslassventil 10 strömt, welches in seiner Entlüftungsstellung diese Druckluft an seine Entlüftung 8 steuert. Folglich fällt der Druck in den Luftfederbälgen 5 synchron ab und die Anhängerfahrzeugplattform sinkt solange ab, bis der Taster des Entlüftungsventils 6 losgelassen wird. Dann stellt sich wieder der oben beschriebene Betriebszustand "Stopp" ein.

Falls im Betriebszustand "Fahrt" das Ist-Niveau der Anhängerfahrzeugplattform von einem vorgegebenen Soll-Niveau abweicht, werden die beiden elektromagnetischen Vorsteuerventile 22, 23 vom Steuergerät angesteuert, um entsprechende Vorsteuerdrücke für die Hauptluft-Ventileinrichtung 9 zu erzeugen. Dabei steuert das eine elektromagnetische Vorsteuerventil 23 das kombinierte Einlass-/Auslassventil 10 und das andere elektromagnetische Vorsteuerventil 22 die beiden Halteventile 11, 12 vor. Zum Heben der Anhängerfahrzeugplattform wird beispielsweise das eine elektromagnetische Vorsteuerventil 23 in seine Belüftungsstellung gesteuert, damit Druckluft aus dem Druckluftvorrat 7 den Steueranschluss 28 des kombinierten Einlass-/Auslassventils 10 belüften kann, welches daraufhin in seine Belüftungsstellung schaltet. Parallel hierzu wird auch das andere elektromagnetische Vorsteuerventil 22 in seine Belüftungsstellung geschaltet, um aus dem Druckluftvorrat 7, mit welchem es ebenfalls über die Druckluftverbindung 34 verbunden ist, Druckluft an die Steueranschlüsse 20, 21 der beiden Halteventile 11, 12 zu leiten, damit diese in Durchlassstellung schalten und die vom kombinierten Einlass-/Auslassventil 10 ausgesteuerte Druckluft aus dem Druckluftvorrat 7 in die Luftfederbälge 5 zu leiten.

Zum Senken der Anhängerfahrzeugplattform wird lediglich das andere elektromagnetische Vorsteuerventil 22 in seine Belüftungsstellung gesteuert, um die beiden Halteventile 11, 12 in Durchlassstellung zu schalten, während das eine elektromagnetische Vorsteuerventil 23 in Entlüftungsstellung geschaltet bleibt, damit der Steueranschluss 28 des kombinierten Einlass-/Auslassventils 10 mit der Entlüftung des in Entlüftungsstellung federbelastet geschalteten manuell betätigbaren Belüftungsventils 4 verbunden ist, wodurch das kombinierte Einlass-/Auslassventil 10 in seine Entlüftungsstellung geschaltet bleibt. Dadurch kann Druckluft aus den Luftfederbälgen 5 über die Halteventile 11, 12 und die Entlüftung 8 des kombinierten Einlass-/Auslassventil 10 in die Atmosphäre strömen.

### Bezugszahlenliste

- 1: Luftfederungseinrichtung
- 2: Ventileinrichtung
- 3: Vorsteuerventileinrichtung
- 4: Belüftungsventil
- 5: Luftfederbälge
- 6: Entlüftungsventil
- 7: Druckluftvorrat
- 8: Entlüftung
- 9: Hauptluft-Ventileinrichtung
- 10: kombinierte Einlass-/Auslassventileinrichtung
- 11: Halteventil
- 12: Halteventil
- 13: Luftfederbälge links
- 14: Luftfederbälge rechts
- 15: Handbetätigungsmodul
- 16: Druckluftvorrat
- 17: elektronisch gesteuerte Ventileinrichtung
- 18: Ausgang
- 19: Wechselventil
- 20: Steueranschluss
- 21: Steueranschluss
- 22: elektromagnetisches Vorsteuerventil
- 23: elektromagnetisches Vorsteuerventil
- 24: elektrischer Steueranschluss
- 25: elektrischer Steueranschluss
- 26: Druckluftverbindung
- 27: Eingang
- 28: Steueranschluss
- 29: Druckluftverbindung
- 30: Eingang
- 31: Druckluftverbindung
- 33: Drossel
- 34: Druckluftverbindung

## Patentansprüche

1. Ventileinrichtung (2) für eine Luftfederungseinrichtung (1) eines luftgefederten Fahrzeugs, mit
a) einer Vorsteuerventileinrichtung (3) beinhaltend ein manuell betätigbares Belüftungsventil (4) zum Belüften von Luftfederbälgen (5) der Luftfederungseinrichtung (1) und ein manuell betätigbares Entlüftungsventil (6) zum Entlüften der Luftfederbälge (5) zum willkürlichen Heben und Senken eines Fahrzeugaufbaus des Fahrzeugs,
b) einer von der Vorsteuerventileinrichtung (3) pneumatisch steuerbaren, einen Hauptluftstrom von einem Druckluftvorrat (7) zu den Luftfederbälgen (5) bzw. von den Luftfederbälgen (5) zu einer Entlüftung (8) steuernden Hauptluft-Ventileinrichtung (9), welche eine kombinierte Einlass-/Auslassventilventileinrichtung (10) mit einer Belüftungsstellung und einer Entlüftungsstellung beinhaltet, wobei
c) die Hauptluft-Ventileinrichtung (9) zwei in Belüftungsrichtung der Luftfederbälge (5) gesehen der kombinierten Einlass-/Auslassventileinrichtung (10) nachgeordnete Halteventile (11, 12) mit einer Sperrstellung und einer Durchlassstellung beinhaltet, wobei das eine Halteventil (12) den Luftfederbälgen (14) einer rechten Fahrzeugseite oder einer Achse und das andere Halteventil (11) den Luftfederbälgen (13) einer linken Fahrzeugseite oder einer anderen Achse zugeordnet ist, und wobei
d) das manuell betätigbare Belüftungsventil (4) der Vorsteuerventileinrichtung (3) mit der Steuerseite (28) der kombinierten Einlass-/Auslassventilventileinrichtung (10) verbunden ist, und wobei
e) die Vorsteuerventileinrichtung (3) weiterhin eine dem manuell betätigbaren Belüftungsventil (4) und dem manuell betätigbaren Entlüftungsventil (6) einerseits und der Hauptluftventileinrichtung (9) andererseits zwischengeordnete, elektronisch gesteuerte Ventileinrichtung (17) beinhaltet, zum Vorsteuern der Hauptluft-Ventileinrichtung (9) derart, dass durch Be- oder Entlüften der Luftfederbälge (5) eine Abweichung eines Ist-Niveaus des Fahrzeugaufbaus von einem Soll-Niveau auf eine maximal zulässige Abweichung regelbar ist,
**dadurch gekennzeichnet, dass**
f) das manuell betätigbare Belüftungsventil (4) der Vorsteuerventileinrichtung (3) mit dem einen Eingang (27) eines Wechselventils (19) verbunden ist,
g) das manuell betätigbare Entlüftungsventil (6) der Vorsteuerventileinrichtung (3) mit dem anderen Eingang (30) des Wechselventils (19) und der Ausgang (18) des Wechselventils (19) mit der Steuerseite (20, 21) der Halteventile (11, 12) verbunden ist, und dass
h) die elektronisch gesteuerte Ventileinrichtung (17) ein dem Ausgang (18) des Wechselventils (19) einerseits und der Steuerseite (20, 21) der Halteventile (11, 12) andererseits zwischengeordnetes, in eine Entlüftungsstellung federbelastetes und in eine Belüftungsstellung elektronisch steuerbares 3/2-Wege-Magnetventil (22) sowie ein dem manuell betätigbaren Belüftungsventil (4) einerseits und der kombinierten Einlass-/Auslassventilventileinrichtung (10) zwischengeordnetes, in eine Entlüftungsstellung federbelastetes und in eine Belüftungsstellung elektronisch steuerbares 3/2-Wege-Magnetventil (23) beinhaltet.

2. Ventileinrichtung nach Anspruch 1, **dadurch gekennzeichnet, dass** die kombinierte Einlass-/Auslassventilventileinrichtung (10) durch ein in die Entlüftungsstellung federbelastetes und in die Belüftungsstellung pneumatisch steuerbares 3/2 Wegeventil gebildet wird.

3. Ventileinrichtung nach Anspruch 1 oder 2, **dadurch gekennzeichnet, dass** die Halteventile (11, 12) als in die Sperrstellung federbelastete und in die Durchlassstellung pneumatisch steuerbares 2/2-Wegeventile ausgebildet sind.

4. Ventileinrichtung nach einem der vorhergehenden Ansprüche, **dadurch gekennzeichnet, dass** das manuell betätigbare Belüftungsventil (4) und das manuell betätigbare Entlüftungsventil (6) der Vorsteuerventileinrichtung (3) jeweils als in eine Entlüftungsstellung federbelastete und in eine Belüftungsstellung durch Handbetätigung steuerbare 3/2-Wegeventile ausgebildet sind.

5. Ventileinrichtung nach einem der vorhergehenden Ansprüche, **dadurch gekennzeichnet, dass** der von der elektronisch gesteuerten Ventileinrichtung (17) ausgesteuerte Steuerluftstrom für die Hauptluft-Ventileinrichtung (9) aus dem den Hauptluftstrom für die Luftfederbälge (5) liefernden Druckluftvorrat (7) stammt.

6. Ventileinrichtung nach einem der vorhergehenden Ansprüche, **dadurch gekennzeichnet, dass** der von dem manuell betätigbaren Belüftungsventil (4) und der von dem manuell betätigbaren Entlüftungsventil (6) ausgesteuerte Steuerluftstrom für die Hauptluft-Ventileinrichtung (9) aus einem von dem den Hauptluftstrom liefernden Druckluftvorrat (7) verschiedenen, weiteren Druckluftvorrat (16) stammt.

7. Ventileinrichtung nach Anspruch 6 **dadurch gekennzeichnet, dass** das manuell betätigbare Belüftungsventil (4) und das manuell betätigbare Entlüftungsventil (6) in einem separaten Handbetätigungsmodul (15) aufgenommen sind, welches von dem weiteren Druckluftvorrat (16) versorgt wird.

8. Ventileinrichtung nach einem der vorhergehenden Ansprüche, **dadurch gekennzeichnet, dass** das eine Halteventil (12) ausgangsseitig mit den Luftfederbälgen (14) der rechten Fahrzeugseite oder der einen Achse und das andere Halteventil (11) ausgangsseitig mit den Luftfederbälgen (13) der linken Fahrzeugseite oder der anderen Achse verbunden ist.

9. Ventileinrichtung nach einem der vorhergehenden Ansprüche, **dadurch gekennzeichnet, dass** die Luftfederbälge (14) der rechten Fahrzeugseite oder der einen Achse über wenigstens eine Drossel (3) mit den Luftfederbälgen (13) der linken Fahrzeugseite oder der anderen Achse verbunden sind.

10. Luftfederungseinrichtung (1) eines luftgefederten Fahrzeugs, **dadurch gekennzeichnet, dass** sie wenigstens eine Ventileinrichtung (2) nach einem der vorhergehenden Ansprüche beinhaltet.

## Claims

1. Valve device (2) for an air-spring device (1) of an air-sprung vehicle, with
a) a pilot control valve device (3) comprising a manually actuated air inlet valve (4) for letting air into air-spring bellows (5) of the air-spring device (1) and a manually actuated air outlet valve (6) for letting air out of the air-spring bellows (5), for the discretionary raising and lowering of a vehicle body of the vehicle,
b) a main air valve device (9) that can be controlled pneumatically by the pilot control valve device (3), which valve (9) controls a main air flow from a compressed-air tank (7) to the air-spring bellows (5) and from the air-spring bellows to a venting outlet (8), which comprises a combined inlet/outlet valve device (10) with an air inflow setting and an air outflow setting, wherein
c) the main air valve device (9) comprises two holding valves (11, 12) downstream from the combined inlet/outlet valve device as viewed in the air inflow direction of the air-spring bellows (5), with a blocking position and a feed-though direction, such that one holding valve (12) is associated with the air-spring bellows (14) on the right-hand side of the vehicle or of an axle and the other holding valve (11) is associated with the air-spring bellows (13) on the left-hand side of the vehicle or of another axle, and wherein
d) the manually actuated air inlet valve (4) of the pilot control valve device (3) is connected to the control side (28) of the combined inlet/outlet valve device (10), and wherein
e) in addition the pilot valve device (3) comprises an electronically controlled valve device (17) interposed between, on the one hand, the manually actuated air inlet valve (4) and the manually actuated air outlet valve (6) and, on the other hand, the main air valve device (9), for the pilot control of the main air valve (9) in such manner that by letting air into or out of the air-spring bellows (5) a deviation of an actual level of the vehicle body from a desired level can be regulated to a maximum acceptable deviation,
**characterised in that**
f) the manually actuated air inlet valve (4) of the pilot control valve device (3) is connected to one input (27) of a shuttle valve (19),
g) the manually actuated air outlet valve (6) of the pilot control valve device (3) is connected to the other input (30) of the shuttle valve (19) and the output (18) of the shuttle valve (19) is connected to the control side (20, 21) of the holding valves (11, 12), and
h) the electronically controlled valve device (17) comprises an electronically controlled 3/2-way magnetic valve (22) interposed between, on the one hand, the output (18) of the shuttle valve (19) and, on the other hand, the control side (20, 21) of the holding valves (20, 21), which valve (22) is spring-loaded in an air outlet position and can be electronically set to an air inlet position, and also an electronically controlled 3/2-way magnetic valve (23) interposed between, on the one hand, the manually actuated air inlet valve (4) and, on the other hand, the combined inlet/outlet valve device (10), which valve (23) is spring-loaded in an air outlet position and can be electronically set to an air inlet position.

2. Valve device according to Claim 1, **characterised in that** the combined inlet/outlet valve device (10) is in the form of a 3/2-way valve spring-loaded in the air outlet position that can be pneumatically set to the air inlet position.

3. Valve device according to Claims 1 or 2, **characterised in that** the holding valves (11, 12) are in the form of 2/2-way valves spring-loaded in the blocking position that can be pneumatically set to the feed-through position.

4. Valve device according to any of the preceding claims, **characterised in that** the manually actuated air inlet valve (4) and the manually actuated air outlet valve (6) of the pilot control valve device (3) are in the form of 3/2-way valves spring-loaded in an air outlet position, which can be manually set to an air inlet position.

5. Valve device according to any of the preceding claims, **characterised in that** the control air flow for the main air valve device (9) adjusted by the electronically controlled valve device (17) comes from the compressed-air tank (7) that delivers the main air flow for the air-spring bellows (5).

6. Valve device according to any of the preceding claims, **characterised in that** the control air flow for the main air valve device (9) adjusted by the manually actuated air inlet valve (4) and by the manually actuated air outlet valve (6) comes from a further compressed-air tank (16) different from the compressed-air tank (7) that delivers the main airflow.

7. Valve device according to Claim 6, **characterised in that** the manually actuated air inlet valve (4) and the manually actuated air outlet valve (6) are accommodated in a separate, hand-operated module (15) which is supplied from the said further compressed-air tank (16).

8. Valve device according to any of the preceding claims, **characterised in that** one of the holding valves (12) is connected on its output side with the air-spring bellows (14) on the right-hand side of the vehicle or of one axle, and the other holding valve (11) is connected on its output side with the air-spring bellows (13) on the left-hand side of the vehicle or of the other axle.

9. Valve device according to any of the preceding claims, **characterised in that** the air-spring bellows (14) on the right-hand side of the vehicle or of one axle is connected by way of at least one throttle (3) to the air-spring bellows (13) on the left-hand side of the vehicle or of the other axle.

10. Air-spring device (1) of an air-sprung vehicle, **characterised in that** it comprised at least one valve device (2) according to any of the preceding claims.

## Revendications

1. Dispositif (2) de soupape pour un dispositif (1) de suspension pneumatique d'un véhicule à suspension pneumatique, comprenant
a) un dispositif (3) de soupape pilote comportant une soupape (4) d'alimentation en air pouvant être actionnée manuellement pour alimenter en air des soufflets (5) de suspension pneumatique du dispositif (1) de suspension pneumatique et une soupape (6) de purge pouvant être actionnée pour purger les soufflets (5) de suspension pneumatique afin de lever et d'abaisser à volonté la carrosserie du véhicule,
b) un dispositif (9) de soupape d'air principal, qui peut être commandé pneumatiquement par le dispositif (3) de soupape pilote, qui commande un courant d'air principal d'un réservoir (7) d'air comprimé aux soufflets (5) de suspension pneumatique ou des soufflets (5) de suspension pneumatique à une purge (8) et qui comporte un dispositif (10) de soupape combiné soupape d'entrée/soupape de sortie ayant une position d'alimentation en air et une position de purge, dans lequel
c) le dispositif (9) de soupape d'air principal comporte deux soupapes (11, 12) d'arrêt montées, considéré dans le sens de l'alimentation en air des soufflets (5) de suspension pneumatique, après le dispositif (10) combiné de soupape d'entrée/soupape de sortie et ayant une position d'arrêt et une position de passage, l'une des soupapes (12) d'arrêt étant associée aux soufflets (14) de suspension pneumatique d'un côté droit du véhicule ou d'un essieu et l'autre soupape (11) d'arrêt aux soufflets (13) de suspension pneumatique d'un côté gauche du véhicule ou d'un autre essieu et dans lequel
d) la soupape (4) d'alimentation en air, pouvant être actionnée manuellement, du dispositif (3) de soupape pilote est reliée au côté (28) de commande du dispositif (10) de soupape combiné à soupape d'entrée/soupape de sortie et dans lequel
e) le dispositif (3) de soupape pilote comporte, en outre, un dispositif (17) de soupape commandé électroniquement et disposé d'une part entre la soupape (6) de purge pouvant être actionnée manuellement d'une part et le dispositif (10) de soupape à air principal d'autre part, pour piloter le dispositif (9) de soupape à air principal, de manière à pouvoir, par l'alimentation en air ou la purge des soufflets de suspension pneumatique, régler, à un écart admissible maximum, un écart d'un niveau réel de la carrosserie du véhicule à un niveau de consigne, **caractérisé en ce que**
f) la soupape (4) d'alimentation en air, pouvant être actionnée manuellement, du dispositif (3) de soupape pilote est reliée à une entrée (27) d'une soupape (19) à deux voies,
g) la soupape (6) de purge, pouvant être actionnée manuellement, du dispositif (3) de soupape pilote est reliée à l'autre entrée (30) de la soupape (19) à deux voies et la sortie (18) de la soupape (19) à deux voies au côté (20, 21) des soupapes (11, 12) d'arrêt et **en ce que**
h) le dispositif (17) de soupape commandé électroniquement comporte une électrovanne (22) à 3/2 voies, disposée entre la sortie (18) de la soupape (19) à deux voies d'une part et le côté (20, 21) de commande des soupapes (11, 12) d'arrêt d'autre part et pouvant, sous l'action d'un ressort, être mis dans une position de purge et, en étant commandé électroniquement, dans une position d'alimentation en air, ainsi qu'une électrovanne (23) à 3/2 voies montée entre la soupape (4) d'alimentation en air, pouvant être actionnée manuellement d'une part, et le dispositif (10) de soupape combiné de soupape d'entrée/sortie et pouvant, en étant soumise à l'action d'un ressort, être mise dans la position de purge et, en étant commandée électroniquement, dans une position d'alimentation en air.

2. Dispositif de soupape suivant la revendication 1, **caractérisé en ce que** le dispositif (10) de soupape combiné de soupape d'entrée/soupape de sortie est formé par une soupape à 3/2 voies pouvant être mise, sous l'action d'un ressort, dans la position de purge et pouvant être mise, par commande pneumatique, dans la position d'alimentation en air.

3. Dispositif de soupape suivant la revendication 1 ou 2, **caractérisé en ce que** les soupapes (11, 12) d'arrêt sont constituées sous la forme de soupapes à 2/2 voies pouvant être mises, sous l'action d'un ressort, dans la position d'arrêt et pouvant être mises, par commande pneumatique, dans la position de passage.

4. Dispositif de soupape suivant l'une des revendications précédentes, **caractérisé en ce que** la soupape (4) d'alimentation en air, pouvant être actionnée manuellement, et la soupape (6) de purge, pouvant être actionnée manuellement, du dispositif (3) de soupape pilote sont constituées respectivement sous la forme de soupapes à 3/2 voies pouvant être mises, sous l'action d'un ressort, dans une position de purge et, par commande manuelle, dans une position d'alimentation en air.

5. Dispositif de soupape suivant l'une des revendications précédentes, **caractérisé en ce que** le courant d'air principal, commandé par le dispositif (17) de soupape à commande électronique, pour le dispositif (9) de soupape d'air principal, provient du réservoir d'air comprimé fournissant le courant d'air principal pour les soufflets (5) de suspension pneumatique.

6. Dispositif de soupape suivant l'une des revendications précédentes, **caractérisé en ce que** le courant d'air de commande, commandé par la soupape (4) d'alimentation en air, pouvant être actionnée manuellement, et celui commandé par la soupape (6) de purge, pouvant être actionnée manuellement, pour le dispositif (9) de soupape d'air principal, provient d'un autre réservoir (16) d'air comprimé différent du réservoir (7) fournissent le courant d'air principal.

7. Dispositif de soupape suivant la revendication 6, **caractérisé en ce que** la soupape (4) d'alimentation en air, pouvant être actionnée manuellement, et la soupape (6) de purge, pouvant être actionnée manuellement, sont reçues dans un module (15) d'actionnement manuel distinct, qui est alimenté par l'autre réservoir (6) d'air comprimé.

8. Dispositif de soupape suivant l'une des revendications précédentes, **caractérisé en ce que** l'une des soupapes (12) d'arrêt est reliée du côté de la sortie aux soufflets (14) de suspension pneumatique, du côté droit du véhicule, ou de l'un des essieux et l'autre soupape (11) d'arrêt est reliée, du côté de la sortie, aux soufflets (13) de suspension pneumatique, du côté gauche du véhicule ou de l'autre essieu.

9. Dispositif de soupape suivant l'une des revendications précédentes, **caractérisé en ce que** les soufflets (14) de suspension pneumatique, du côté droit du véhicule, ou de l'un des essieux sont reliés par au moins un étranglement (3) au soufflet (13) de suspension pneumatique, du côté gauche du véhicule ou de l'autre essieu.

10. Dispositif (1) de suspension pneumatique d'un véhicule à suspension pneumatique, **caractérisé en ce qu'**il comporte au moins un dispositif (2) de soupape suivant l'une des revendications précédentes.
